# EUROPEAN PATENT SPECIFICATION

(11) **EP 4 602 789 B1**
(45) Date of publication and mention of the grant of the patent: **08.07.2026**
(21) Application number: 23800651.4
(22) Date of filing: 10.10.2023
(51) Int. Cl.: H04L 67/10

(54) **AGGREGATABLE APPLICATION PROGRAMMING INTERFACE**
AGGREGIERBARE ANWENDUNGSPROGRAMMIERUNGSSCHNITTSTELLE
INTERFACE DE PROGRAMMATION D'APPLICATION POUVANT ÊTRE AGRÉGÉE

(30) Priority: 11.10.2022 US 202218045602
(43) Date of publication of application: 20.08.2025
(73) Proprietor: Google LLC, Mountain View, CA 94043 (US)
(72) Inventor: LIU, Naitian, Mountain View, California 94043 (US)
(74) Representative: Betten & Resch
(86) International application number: PCT/US2023/034794
(87) International publication number: WO 2024/081217

(56) References cited:
- US-A1- 2019 027 237
- US-A1- 2019 230 169
- US-B1- 11 199 987

## Description

### TECHNICAL FIELD

This disclosure relates to an aggregatable application programming interface.

### BACKGROUND

Application programming interfaces (APIs) are software interfaces that allow two or more software applications to communicate. These APIs are commonly used for communications between a client and a remote server. A common example is a representational state transfer (REST) API based on the HyperText Transfer Protocol (HTTP) in web applications. In these examples, a client sends a request to the server with required information. The server receives the request, extracts the information from the request, and performs the corresponding business logic before returning a response as a result of the API call to the client. Such an API format is widely adopted and typically satisfies a variety of requirements for common web application architectures.

Document US 2019/027237 A1 discloses a method for providing a blockchain network for secure exchange of healthcare information.

### SUMMARY

One aspect of the disclosure provides a computer-implemented method for an aggregatable application programming interface (API). The method, when executed by data processing hardware causes the data processing hardware to perform operations. The operations include receiving, from a third party service, an aggregation request requesting aggregation of client data from a client of the third party service. The operations also include receiving, from an API executed by a client device of the client, a first portion of the client data. The operations include storing the first portion of the client data and, after storing the first portion of the client data, receiving, from the API, a second portion of the client data. The operations include determining that the second portion of the client data is a final portion of the client data. In response to determining that the second portion of the client data is the final portion of the client data, the operations include aggregating the first portion of the client data with the second portion of the client data. The operations also include transmitting the aggregated client data to the third party service.

Implementations of the disclosure may include one or more of the following optional features. In some implementations, the operations further include, prior to transmitting the aggregated client data to the third party service, receiving, from a second API executed by a second client device of a second client, a third portion of the client data and aggregating the third portion of the client data with the first portion of the client data and the second portion of the client data. In some examples, the operations further include, prior to aggregating the first portion of the client data with the second portion of the client data, authenticating the client. In some of these examples, authenticating the client includes receiving, from the API, client credentials.

Optionally, storing the first portion of the client data includes determining that a data limit threshold has failed to be satisfied. In some implementations, aggregating the first portion of the client data with the second portion of the client data includes determining that the data limit threshold has been satisfied. Aggregating the first portion of the client data with the second portion of the client data may include combining the first portion of the client data and the second portion of the client data, filtering the first portion of the client data and the second portion of the client data, or transforming the first portion of the client data and the second portion of the client data.

**In** some examples, receiving the first portion of the client data includes transmitting, to the API, a response acknowledging receipt of the first portion of the client data. The operations may further include, after transmitting the aggregated client data to the third party service, receiving, from the third party service, a success response indicating successful processing of the aggregated client data and forwarding the success response to the API. In some implementations, the operations further include, prior to receiving the aggregation request, receiving, from the third party service, a configuration file. The configuration file includes configuration information defining collection of the aggregated client data.

Another aspect of the disclosure provides a system for an aggregatable API. The system includes data processing hardware and memory hardware in communication with the data processing hardware. The memory hardware stores instructions that when executed on the data processing hardware cause the data processing hardware to perform operations. The operations include receiving, from a third party service, an aggregation request requesting aggregation of client data from a client of the third party service. The operations also include receiving, from an API executed by a client device of the client, a first portion of the client data. The operations include storing the first portion of the client data and, after storing the first portion of the client data, receiving, from the API, a second portion of the client data. The operations include determining that the second portion of the client data is a final portion of the client data. In response to determining that the second portion of the client data is the final portion of the client data, the operations include aggregating the first portion of the client data with the second portion of the client data. The operations also include transmitting the aggregated client data to the third party service.

This aspect may include one or more of the following optional features. In some implementations, the operations further include, prior to transmitting the aggregated client data to the third party service, receiving, from a second **API** executed by a second client device of a second client, a third portion of the client data and aggregating the third portion of the client data with the first portion of the client data and the second portion of the client data. In some examples, the operations further include, prior to aggregating the first portion of the client data with the second portion of the client data, authenticating the client. In some of these examples, authenticating the client includes receiving, from the API, client credentials.

Optionally, storing the first portion of the client data includes determining that a data limit threshold has failed to be satisfied. In some implementations, aggregating the first portion of the client data with the second portion of the client data includes determining that the data limit threshold has been satisfied. Aggregating the first portion of the client data with the second portion of the client data may include combining the first portion of the client data and the second portion of the client data, filtering the first portion of the client data and the second portion of the client data, or transforming the first portion of the client data and the second portion of the client data.

In some examples, receiving the first portion of the client data includes transmitting, to the API, a response acknowledging receipt of the first portion of the client data. The operations may further include, after transmitting the aggregated client data to the third party service, receiving, from the third party service, a success response indicating successful processing of the aggregated client data and forwarding the success response to the API. In some implementations, the operations further include, prior to receiving the aggregation request, receiving, from the third party service, a configuration file. The configuration file includes configuration information defining collection of the aggregated client data.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1 is a schematic view of an example system for an application programming interface (API) aggregator.
FIG. 2 is a schematic view of exemplary components of the API aggregator of FIG. 1.
FIGS. 3A and 3B are sequence diagrams of API requests for collecting client data.
FIG. 4 a flowchart of an example arrangement of operations for a method for an aggregatable API.
FIG. 5 is a schematic view of an example computing device that may be used to implement the systems and methods described herein.

Like reference symbols in the various drawings indicate like elements.

### DETAILED DESCRIPTION

Application programming interfaces (APIs) are software interfaces that allow two or more software applications to communicate. These APIs are commonly used for communications between a client and a remote server. A common example is a representational state transfer (REST) API based on HyperText Transfer Protocol (HTTP) in web applications. In these examples, a client sends a request to the server with required information. The server receives the request, extracts the information from the request, and performs the corresponding business logic before returning a response as a result of the API call to the client. Such an API format is widely adopted and typically satisfies a variety of requirements for common web application architectures.

However, such an API format is not ideal in several different use cases. For example, a client may need to perform multiple actions for the server to collect the information required by server-side business logic. Specifically, when an application requires users or clients to step through multiple forms before combining the forms together (e.g., tax reporting software), the server-side logic generally must provide multiple APIs for each form. In this case, the frontend user interface (UI) program must call the corresponding API for each form when, for example, the user selects a "next" button. Next, the server-side logic must save the information from each form to a database. Once the server has received all of the forms from the user, the server-side logic must retrieve or load the information from the database to allow the user to review the information and to aggregate the information together (e.g., for transmission to a business logic handler). In other examples, information sent to the server-side business logic must be collected from multiple clients/users. For instance, a business process management application requires multiple users to provide information during each step of a process. These examples require the server to handle significant logic in collecting and combing information provided by multiple clients or actions prior to sending the completed or aggregated information to a business logic handler.

Implementations herein include an API aggregator that abstracts away information collection and combination processes for services such that the services only require server-side logic for focusing on business logic. This allows these services to simplify implementation and reduce costs.

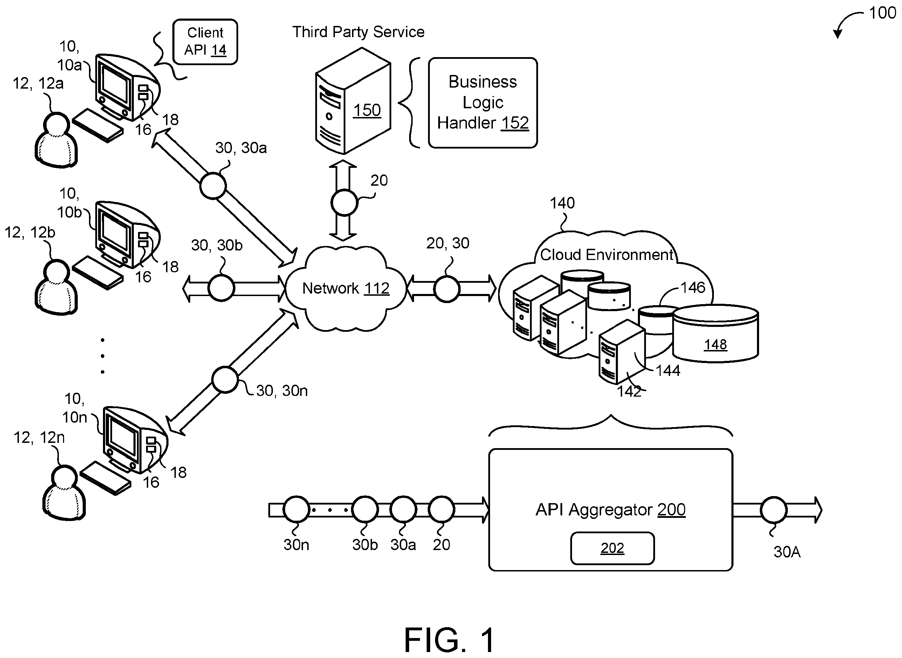

Referring to FIG. 1, in some implementations, a data aggregation system 100 includes a remote system 140 in communication with one or more client devices 10, 10an each associated with a respective client 12, 12a-n via a network 112. The remote system 140 may be a single computer, multiple computers, or a distributed system (e.g., a cloud environment) having scalable / elastic resources 142 including computing resources 144 (e.g., data processing hardware) and/or storage resources 146 (e.g., memory hardware). A data store 148 (i.e., a remote storage device) may be overlain on the storage resources 146 to allow scalable use of the storage resources 146 by one or more of the clients (e.g., the client device 10) or the computing resources 144.

The remote system 140 is configured to communicate with the client devices 10 via, for example, the network 112. The client device(s) 10 may correspond to any computing device, such as a desktop workstation, a laptop workstation, or a mobile device (i.e., a smart phone). Each client device 10 includes computing resources 18 (e.g., data processing hardware) and/or storage resources 16 (e.g., memory hardware).

The remote system executes an API aggregator 200 that provides information collection and combination extraction for one or more third party services 150. The third party services 150 may be remote from the remote system 140 and/or the clients 12. The third party service 150 (e.g., a server owned or operated by the third party service 150) executes business logic that includes custom rules and/or algorithms for handling information collected from the clients 12. The third party service 150 may communicate with the API aggregator 200 via the network 112 or a different network altogether.

The **API** aggregator 200 receives, from the third party service 150, an aggregation request 20 requesting aggregation of client data 30, 30a-n from one or more clients 12 of the third party service 150. For example, the aggregation request 20 requests the API aggregator 200 aggregate a single portion of the client data 30 from each client 12 of multiple clients 12. In another example, the aggregation request 20 requests the API aggregator 200 aggregate multiple portions of the client data 30 from a single client 12. In yet another example, the aggregation request 20 requests the API aggregator 200 aggregate multiple portions of the client data 30 from each client 12 of multiple clients 12. The client data 30 may represent any type of data, such as tables, text files, forms, images, audio files, messages, metadata, etc.

**In** some implementations, the API aggregator 200, after receiving the aggregation request 20, receives a first portion of the client data 30a from a client API 14 executing on a client device 10 of a client 12. The client device 10 may interact with the API aggregator 200 via an API request or an API call that includes the client data 30 within the request. The API aggregator 200, upon receiving the API request, extracts the client data 30 from the API request.

The API aggregator 200 stores the first portion of the client data 30a in a data store (e.g., the data store 148). The API aggregator 200, in some examples, stores the client data 30a in a database or table. After storing the first portion of the client data 30a from the client 12, the API aggregator 200 receives a second portion of the client data 30b from the client API 14. In some examples, the second portion of the client data 30b is from the same client 12 that sent the first portion of the client data 30 (e.g., a first client 12a). In other examples, the second portion of the client data 30b is from a different client 12 (e.g., a second client 12b) that sent the first portion of the client data 30 (e.g., the first client 12a). The API aggregator 200 continues to receive and store the client data 30 until the API aggregator 200 has received all of the client data 30 requested or instructed by the third party service 150. The API aggregator 200 may receive additional client data from different clients 12 and client devices 10. For example, the API aggregator 200 receives, from a second API 14 executed by a second client device 10b of a second client 12b, a third portion of the client data 30c. The API aggregator 200 determines, after receiving one of the portions of the client data 30, that the received portion of the client data 30 is the final portion of the client data 30.

In some examples, the API aggregator 200 determines that a received portion of the client data 30 is the final portion of the client data 30 when a data limit threshold 202 is satisfied. The data limit threshold may be configured by the third party service 150. When the API aggregator 200 determines that the data limit threshold 202 has failed to be satisfied, the API aggregator 200 may determine that the received portion of the client data 30 is not the final portion of the client data 30 and waits for or requests additional client data 30 from one or more clients 12.

After determining that the last received portion of the client data 30 is the final portion of the client data 30 (e.g., the second portion of the client data 30b is the final portion of client data 30), the API aggregator 200 aggregates each received portion of the client data 30 together. Aggregation of the data includes using at least a part of each portion of the received client data 30 together. For example, the portions of the client data 30 may be appended together. The API aggregator 200 may, prior to aggregation, retrieve each portion of the client data 30 from the data store 148. After aggregating each portion of the received client data 30, the API aggregator 200 transmits aggregated client data 30A to the third party service 150.

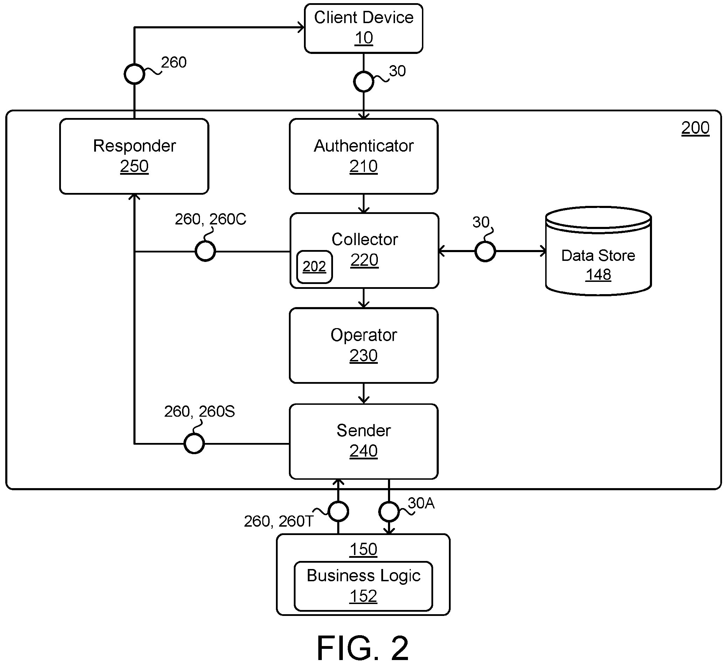

Referring now to FIG. 2, the API aggregator 200, in some implementations, includes an authenticator 210. The authenticator 210, when the API aggregator 200 receives a portion of the client data 30 from a particular client 12, authenticates the portion of the client data 30 and/or the particular client 12 prior to the API aggregator 200 storing and/or aggregating the portion of the client data 30. The authenticator 210 may authenticate the portion of the client data 30 and/or the particular client 12 via client credentials, such as username and passwords, access tokens, etc. For example, the third party service 150 may (e.g., via the aggregation request 20) provide client authentication information to the API aggregator 200 that the authenticator 210 verifies against authentication information provided by the particular client 12 along with the portion of the client data 30 (e.g., via an API request). Specifically, the third party service 150 may provide the particular client 12 with an access token, and the particular client 12 may provide the access token to the API aggregator 200 along with the portion of the client data 30. The same client 12 may provide the same credentials for multiple different portions of the client data 30.

Optionally, the **API** aggregator 200 includes a collector 220. The collector 220 extracts the portion of the client data 30 from the API request and stores the portion of the client data 30 at the data store 148. The collector 220 may determine when the data limit threshold 202 is satisfied. When the data limit threshold 202 is satisfied (i.e., the API aggregator 200 has received the final portion of the client data 30), the collector 220 may retrieve any stored portions of the client data 30 from the data store 148 and provide each received portion of the client data 30 to an operator 230.

The operator 230 may define the operations the API aggregator 200 performs to process the collected portions of the client data 30. These operations may be defined or configured by the third party service 150. For example, the third party service 150 sends a configuration file (e.g., either prior to or via the aggregation request 20) with configuration information defining collection of the client data 30. The configuration information may define the amount of client data 30 to be collected (i.e., determine the data limit threshold 202) and how the client data 30 must be aggregated. The operator 230, based on the configuration information, may combine the portions of the client data 30, filter the portions of the client data 30, and/or transform the portions of the client data 30. The operator 230, in some examples, uses a pipeline to process or aggregate the collected client data 30 and sends the aggregated client data 30A to a sender 240.

The sender 240 receives the aggregated client data 30A from the operator 230 and may transmit the aggregated client data 30A to the third party service 150. That is, the sender 240 defines the approach and interface to provide the aggregated client data 30A to the third party service 150 for processing by the business logic handler 152. For example, the sender 240 calls an API of the third party service 150 to provide the aggregated client data 30 to the third party service 150.

**In** some implementations, the API aggregator 200 includes a responder 250. The responder 250 may respond to each call of the API aggregator 200 (i.e., each **API** call to the **API** aggregator 200 may require a response 260 from the responder 250). The responder 250, when the collector 220 determines that a received portion of the client data 30 fails to satisfy the data limit threshold 202 (i.e., the collector 220 has not received the final portion of the client data 30), may provide a collector response 260, 260C to the client device 10 indicating that the portion of the client data 30 has been successfully received (i.e., acknowledging receipt of the client data 30). Additionally, the collector response 260 may indicate that additional portions of the client data 30 are still required.

The sender 240, after sending the aggregated client data 30A to the third party service 150, may receive a third party response 260, 260T from the third party service indicating a status of the aggregated client data 30A (e.g., successful receipt of the aggregated client data 30A). The sender 240 may provide the responder 250 with a sender response 260, 260S that includes some or all of the third party response 260T. The responder 250 provides the sender response 260S to the client device 10 to indicate to the client device 10 the status of the aggregated client data 30A as determined by the third party service 150. In some implementations, the third party service 150 transmits the third party response 260T directly to the client device 10, thus bypassing the API aggregator 200.

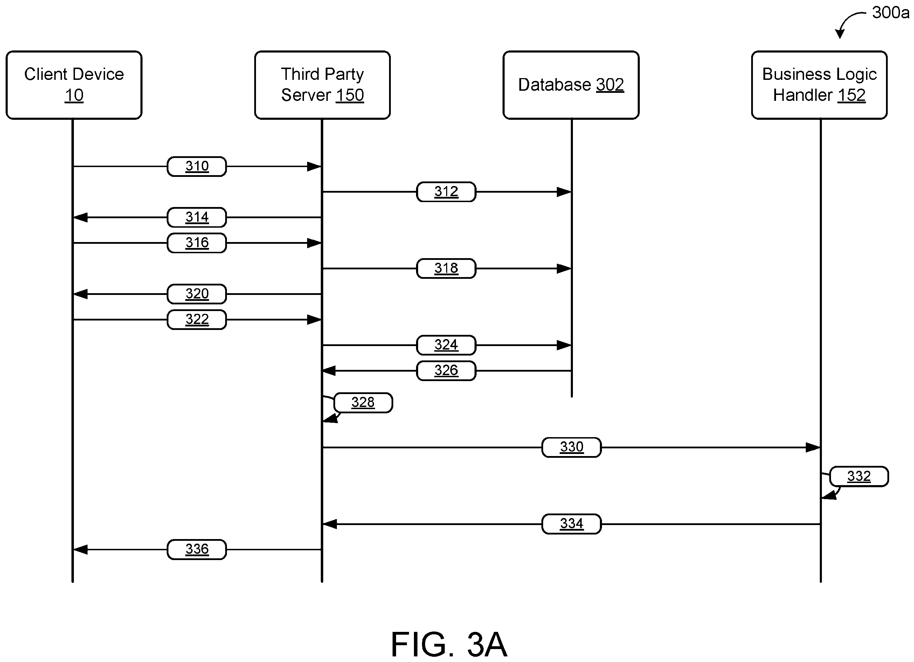

Referring now to FIG. 3A, an exemplary sequence diagram 300a includes a client device 10, a third party service 150 (e.g., a server owned and/or operated by the third party service 150), a database 302 maintained by the third party service 150, and a business logic handler 152 for the third party service 150. In this example, at step 310, the client device 10 sends a first request to the third party service with a first portion of client data 30a. The third party service 150, at step 312, stores the first portion of the client data 30a at the database 302 and, at step 314, provides a success response to the client device 10. At step 316, the client device 10 provides a second portion of the client data 30b to the third party service 150 and at step 318, the third party service 150 stores the second portion of the client data 30b at the database 302. The third party service 150, at step 320, provides another success response to the client device 10, acknowledging receipt of the second portion of the client data 30b.

At step 322, the client device 10 sends a third portion of the client data 30c to the third party service 150. At step 324, the third party service 150 determines that the third portion of the client data 30c is the final portion of the client data 30 and optionally stores the third portion of the client data 30c at the database 302. After determining that the third portion of the client data 30c is the final portion of the client data 30, the third party service 150 retrieves the stored client data 30 at step 326. At step 328, the third party service 150 aggregates (e.g., combines or otherwise includes at least a part of each portion of the client data 30 together) the client data 30a-c and, at step 330, provides the aggregated client data 30A to the business logic handler 152. At step 332, the bustiness logic handler 152, using the aggregated client data 30A, performs the desired logic. At step 334, the business logic handler 152 provides a success response to the third party service 150, indicating that the business logic handler 152 successfully received and/or processed the aggregated client data 30A. At step 336, the third party service forwards the success response from the business logic handler 152 to the client device 10.

As shown in the example of FIG. 3A, the third party service 150 (i.e., the server) must handle heavy logic by repeatedly interacting with the client device 10 via an API and the third party service 150 must manage storing and combining the client data 30. The third party service 150 must design and implement the infrastructure needed store, maintain, and aggregate the client data 30 for each client 12 and for each business logic handler 152, with may consume significant resources.

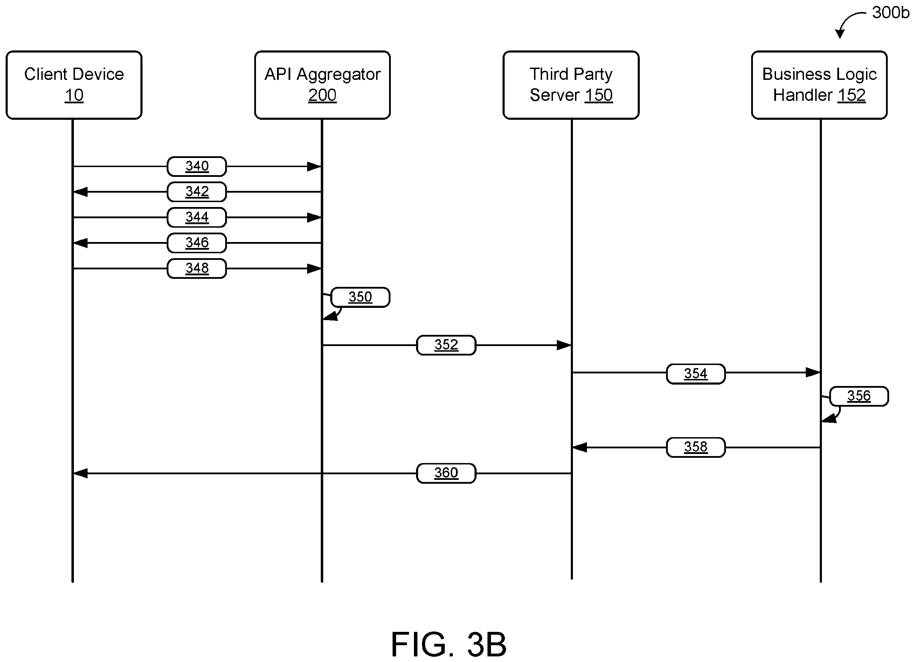

Referring now to FIG. 3B, an exemplary sequence diagram 300b includes a client device 10, an API aggregator 200, a third party service 150, and a business logic handler 152 of the third party service 150. Here, similar to steps 310-322 of the sequence diagram 300a, the client device 10 provides the portions of the client data 30a-c to the API aggregator 200 (with appropriate responses from the API aggregator 200). For example, at steps 340, 344, 348, the client device 10 provides portions of the client data 30 while, at steps 342, 346, the API aggregator 200 provides success responses to the client device 10. At step 350, the API aggregator determines that the final portion of the client data 30 has been received and aggregates the received client data 30. At step 352, the API aggregator 200 provides the aggregated client data 30A to the third party service 150.

The third party service 150, at step 354, provides the aggregated client data 30A to the business logic handler 152. At step 356, the bustiness logic handler 152, using the aggregated client data 30A, performs the desired logic. At step 358, the business logic handler 152 provides a success response to the third party service 150, indicating that the business logic handler 152 successfully received and/or processed the aggregated client data 30A. At step 360, the third party service forwards the success response from the business logic handler 152 to the client device 10 and/or the API aggregator 200. For example, the third party service 150 provides the success response to the API aggregator 200 and the API aggregator 200 forwards the success response to the client device 10. In another example, the third party service 150 sends the success response directly to the client device. In this example, the API aggregator provides an abstraction layer for the third party service 150 for handling the collection and combination of the client data 30. Here, the server-side logic of the third party service 150 is only required to focus on the business logic, thus greatly simplifying the implementation.

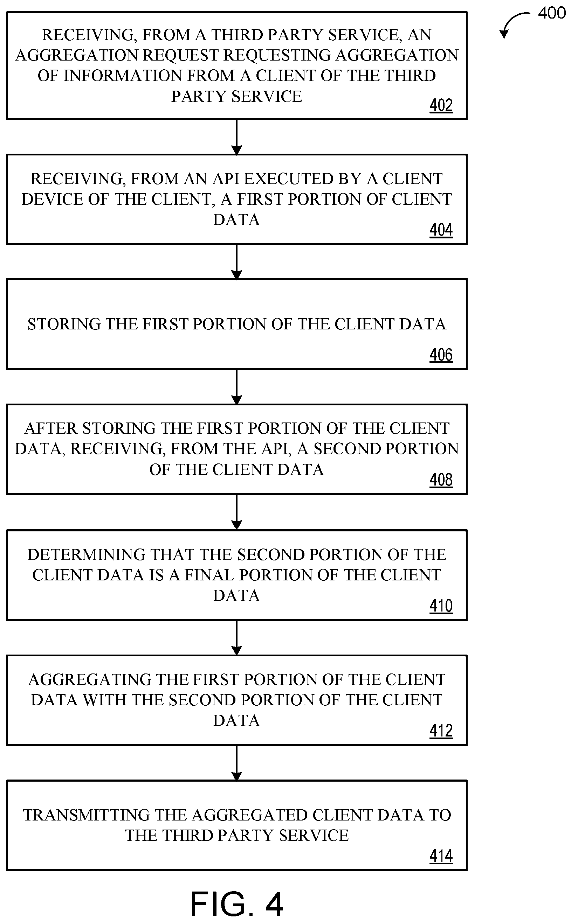

FIG. 4 is a flowchart of an exemplary arrangement of operations for a method 400 for an aggregatable API. The method 400, when executed by data processing hardware 144, causes the data processing hardware 144 to perform operations. The method 400, at operation 402, includes receiving, from a third party service 150, an aggregation request 20 requesting aggregation of client data 30 from a client 12 of the third party service 150. At operation 404, the method 400 includes receiving, from an API 14 executed by a client device 10 of the client 12, a first portion of the client data 30a. The method 400, at operation 406, includes storing the first portion of the client data 30a and, after storing the first portion of the client data 30a, at operation 408, receiving, from the API 14, a second portion of the client data 30b. The method 400, at operation 410, includes determining that the second portion of the client data 30b is a final portion of the client data 30. In response to determining that the second portion of the client data 30 is the final portion of the client data 30, the method 400, at operation 412, includes aggregating the first portion of the client data 30a with the second portion of the client data 30b. At operation 414, the method 400 includes transmitting the aggregated client data 30A to the third party service 150.

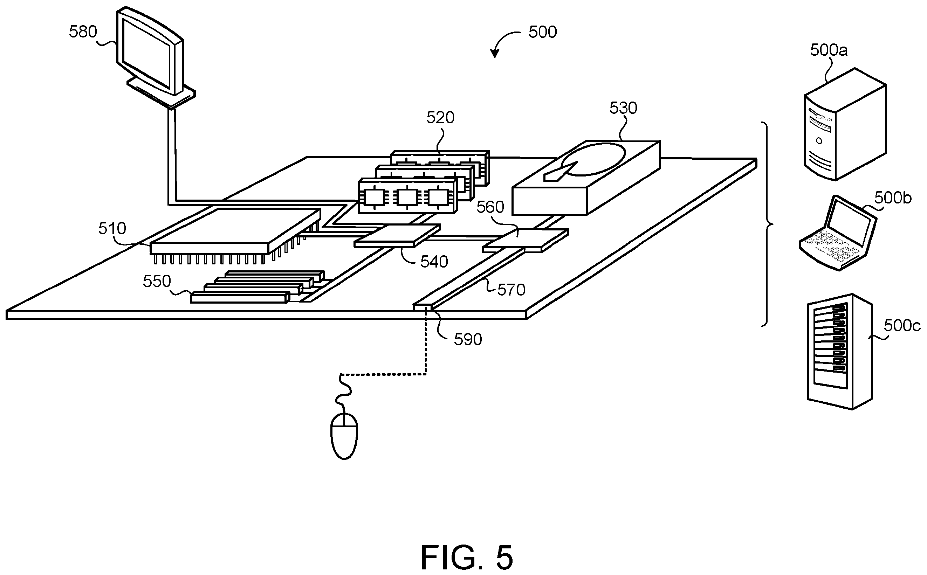

FIG. 5 is a schematic view of an example computing device 500 that may be used to implement the systems and methods described in this document. The computing device 500 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 500 includes a processor 510, memory 520, a storage device 530, a high-speed interface/controller 540 connecting to the memory 520 and high-speed expansion ports 550, and a low speed interface/controller 560 connecting to a low speed bus 570 and a storage device 530. Each of the components 510, 520, 530, 540, 550, and 560, are interconnected using various busses, and may be mounted on a common motherboard or in other manners as appropriate. The processor 510 can process instructions for execution within the computing device 500, including instructions stored in the memory 520 or on the storage device 530 to display graphical information for a graphical user interface (GUI) on an external input/output device, such as display 580 coupled to high speed interface 540. In other implementations, multiple processors and/or multiple buses may be used, as appropriate, along with multiple memories and types of memory. Also, multiple computing devices 500 may be connected, with each device providing portions of the necessary operations (e.g., as a server bank, a group of blade servers, or a multi-processor system).

The memory 520 stores information non-transitorily within the computing device 500. The memory 520 may be a computer-readable medium, a volatile memory unit(s), or non-volatile memory unit(s). The non-transitory memory 520 may be physical devices used to store programs (e.g., sequences of instructions) or data (e.g., program state information) on a temporary or permanent basis for use by the computing device 500. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 530 is capable of providing mass storage for the computing device 500. In some implementations, the storage device 530 is a computer-readable medium. In various different implementations, the storage device 530 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 520, the storage device 530, or memory on processor 510.

The high speed controller 540 manages bandwidth-intensive operations for the computing device 500, while the low speed controller 560 manages lower bandwidth-intensive operations. Such allocation of duties is exemplary only. In some implementations, the high-speed controller 540 is coupled to the memory 520, the display 580 (e.g., through a graphics processor or accelerator), and to the high-speed expansion ports 550, which may accept various expansion cards (not shown). In some implementations, the low-speed controller 560 is coupled to the storage device 530 and a low-speed expansion port 590. The low-speed expansion port 590, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 500a or multiple times in a group of such servers 500a, as a laptop computer 500b, or as part of a rack server system 500c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made without departing from the scope of the disclosure. Accordingly, other implementations are within the scope of the following claims.

## Claims

1. A computer-implemented method (400) executed by data processing hardware (144) that causes the data processing hardware (144) to perform operations comprising:
receiving (402), from a third party service (150), an aggregation request (20) requesting aggregation of client data (30) from a client (12) of the third party service (150);
receiving (404), from an application programming interface, API, (14) executed by a client device (10) of the client (12), a first portion of the client data (30a);
storing (406) the first portion of the client data (30a);
after storing the first portion of the client data (30a), receiving (408), from the API (14), a second portion of the client data (30b);
determining (410) that the second portion of the client data (30b) is a final portion of the client data (30);
in response to determining that the second portion of the client data (30b) is the final portion of the client data (30), aggregating (412) the first portion of the client data (30a) with the second portion of the client data (30b); and
transmitting (414) the aggregated client data (30A) to the third party service (150).

2. The method (400) of claim 1, wherein the operations further comprise, prior to transmitting the aggregated client data (30A) to the third party service (150):
receiving, from a second **API** (14) executed by a second client device (10b) of a second client (12b), a third portion of the client data (30c); and
aggregating the third portion of the client data (30c) with the first portion of the client data (30a) and the second portion of the client data (30b).

3. The method (400) of claim 1 or 2, wherein the operations further comprise, prior to aggregating the first portion of the client data (30a) with the second portion of the client data (30b), authenticating the client (12).

4. The method (400) of any of claims 1-3, wherein authenticating the client (12) comprises receiving, from the API (14), client credentials.

5. The method (400) of any of claims 1-4, wherein storing the first portion of the client data (30a) comprises determining that a data limit threshold (202) has failed to be satisfied.

6. The method (400) of any of claims 1-5, wherein aggregating the first portion of the client data (30a) with the second portion of the client data (30b) comprises determining that the data limit threshold (202) has been satisfied.

7. The method (400) of any of claims 1-6, wherein aggregating the first portion of the client data (30a) with the second portion of the client data (30b) comprises:
combining the first portion of the client data (30a) and the second portion of the client data (30b);
filtering the first portion of the client data (30a) and the second portion of the client data (30b); or
transforming the first portion of the client data (30a) and the second portion of the client data (30b).

8. The method (400) of any of claims 1-7, wherein receiving the first portion of the client data (30a) comprises transmitting, to the API (14), a response (260) acknowledging receipt of the first portion of the client data (30a).

9. The method (400) of any of claims 1-8, wherein the operations further comprise, after transmitting the aggregated client data (30A) to the third party service (150):
receiving, from the third party service (150), a success response (260) indicating successful processing of the aggregated client data (30A); and
forwarding the success response (260) to the API (14).

10. The method (400) of any of claims 1-9, wherein the operations further comprise, prior to receiving the aggregation request (20), receiving, from the third party service (150), a configuration file, the configuration file comprising configuration information defining collection of the aggregated client data (30A).

11. A system (100) comprising:
data processing hardware (144); and
memory hardware (146) in communication with the data processing hardware (144), the memory hardware (146) storing instructions that when executed on the data processing hardware (144) cause the data processing hardware (144) to perform the method of any of claims 1-10.

## Patentansprüche

1. Computerimplementiertes Verfahren (400), das durch Datenverarbeitungshardware (144) ausgeführt wird, das die Datenverarbeitungshardware (144) veranlasst, Operationen durchzuführen, umfassend:
Empfangen (402) einer Aggregationsanforderung (20) von einem Drittanbieterdienst (150), die eine Aggregation von Kundendaten (30) von einem Kunden (12) des Drittanbieterdienstes (150) anfordert;
Empfangen (404) eines ersten Abschnitts der Kundendaten (30a) von einer Anwendungsprogrammierungsschnittstelle, API, (14), die durch eine Kundenvorrichtung (10) des Kunden (12) ausgeführt wird;
Speichern (406) des ersten Abschnitts der Kundendaten (30a);
Empfangen (408) eines zweiten Abschnitts der Kundendaten (30b) von der API (14) nach dem Speichern des ersten Abschnitts der Kundendaten (30a);
Bestimmen (410), dass der zweite Abschnitt der Kundendaten (30b) ein letzter Abschnitt der Kundendaten (30) ist;
Aggregieren (412) des ersten Abschnitts der Kundendaten (30a) mit dem zweiten Abschnitt der Kundendaten (30b) als Reaktion auf das Bestimmen, dass der zweite Abschnitt der Kundendaten (30b) der letzte Abschnitt der Kundendaten (30) ist; und
Übertragen (414) der aggregierten Kundendaten (30A) an den Drittanbieterdienst (150).

2. Verfahren (400) nach Anspruch 1, wobei die Operationen vor dem Übertragen der aggregierten Kundendaten (30A) an den Drittanbieterdienst (150) ferner Folgendes umfassen:
Empfangen eines dritten Abschnitts der Kundendaten (30c) von einer zweiten API (14), die durch eine zweite Kundenvorrichtung (10b) eines zweiten Kunden (12b) ausgeführt wird; und
Aggregieren des dritten Abschnitts der Kundendaten (30c) mit dem ersten Abschnitt der Kundendaten (30a) und dem zweiten Abschnitt der Kundendaten (30b).

3. Verfahren (400) nach Anspruch 1 oder 2, wobei die Operationen vor dem Aggregieren des ersten Abschnitts der Kundendaten (30a) mit dem zweiten Teil der Kundendaten (30b) ferner Authentifizieren des Kunden (12) umfassen.

4. Verfahren (400) nach einem der Ansprüche 1 bis 3, wobei das Authentifizieren des Kunden (12) Empfangen von Kundenanmeldedaten von der API (14) umfasst.

5. Verfahren (400) nach einem der Ansprüche 1 bis 4, wobei das Speichern des ersten Abschnitts der Kundendaten (30a) Bestimmen umfasst, dass ein Datenlimitschwellenwert (202) nicht erfüllt wurde.

6. Verfahren (400) nach einem der Ansprüche 1 bis 5, wobei das Aggregieren des ersten Abschnitts der Kundendaten (30a) mit dem zweiten Abschnitt der Kundendaten (30b) Bestimmen umfasst, dass der Datenlimitschwellenwert (202) erfüllt wurde.

7. Verfahren (400) nach einem der Ansprüche 1 bis 6, wobei das Aggregieren des ersten Abschnitts der Kundendaten (30a) mit dem zweiten Abschnitt der Kundendaten (30b) Folgendes umfasst:
Kombinieren des ersten Abschnitts der Kundendaten (30a) und des zweiten Abschnitts der Kundendaten (30b);
Filtern des ersten Abschnitts der Kundendaten (30a) und des zweiten Abschnitts der Kundendaten (30b); oder
Umwandeln des ersten Abschnitts der Kundendaten (30a) und des zweiten Abschnitts der Kundendaten (30b).

8. Verfahren (400) nach einem der Ansprüche 1 bis 7, wobei das Empfangen des ersten Abschnitts der Kundendaten (30a) Übertragen einer Antwort (260), die den Empfang des ersten Abschnitts der Kundendaten (30a) bestätigt, an die API (14) umfasst.

9. Verfahren (400) nach einem der Ansprüche 1 bis 8, wobei die Operationen nach dem Übertragen der aggregierten Kundendaten (30A) an den Drittanbieterdienst (150) ferner Folgendes umfassen:
Empfangen einer Erfolgsantwort (260), die erfolgreiches Verarbeiten der aggregierten Kundendaten (30A) angibt, von dem Drittanbieterdienst (150); und
Weiterleiten der Erfolgsantwort (260) an die API (14).

10. Verfahren (400) nach einem der Ansprüche 1 bis 9, wobei die Operationen vor dem Empfangen der Aggregationsanforderung (20) ferner Empfangen einer Konfigurationsdatei von dem Drittanbieterdienst (150) umfassen, wobei die Konfigurationsdatei Konfigurationsinformationen umfasst, die eine Erfassung der aggregierten Kundendaten (30A) definieren.

11. System (100), umfassend:
Datenverarbeitungshardware (144); und
Speicherhardware (146) in Kommunikation mit der Datenverarbeitungshardware (144), wobei die Speicherhardware (146) Anweisungen speichert, die bei Ausführung auf der Datenverarbeitungshardware (144) die Datenverarbeitungshardware (144) veranlassen, das Verfahren nach einem der Ansprüche 1 bis 10 durchzuführen.

## Revendications

1. Procédé mis en œuvre par ordinateur (400) exécuté par un matériel de traitement de données (144) qui amène le matériel de traitement de données (144) à réaliser des opérations comprenant :
la réception (402), à partir d'un service tiers (150), d'une demande d'agrégation (20) demandant l'agrégation de données client (30) à partir d'un client (12) du service tiers (150) ;
la réception (404), à partir d'une interface de programmation d'application, API, (14) exécutée par un dispositif client (10) du client (12), d'une première partie des données client (30a) ;
le stockage (406) de la première partie des données client (30a) ;
après le stockage de la première partie des données client (30a), la réception (408), à partir de l'API (14), d'une deuxième partie des données client (30b) ;
la détermination (410) que la deuxième partie des données client (30b) est une partie finale des données client (30) ;
en réponse à la détermination que la deuxième partie des données client (30b) est la partie finale des données client (30), l'agrégation (412) de la première partie des données client (30a) avec la deuxième partie des données client (30b) ; et
la transmission (414) des données client agrégées (30A) au service tiers (150).

2. Procédé (400) selon la revendication 1, dans lequel les opérations comprennent en outre, avant la transmission des données client agrégées (30A) au service tiers (150) :
la réception, à partir d'une seconde API (14) exécutée par un second dispositif client (10b) d'un second client (12b), d'une troisième partie des données client (30c) ; et
l'agrégation de la troisième partie des données client (30c) avec la première partie des données client (30a) et la deuxième partie des données client (30b).

3. Procédé (400) selon la revendication 1 ou 2, dans lequel les opérations comprennent en outre, avant d'agréger la première partie des données client (30a) avec la deuxième partie des données client (30b), l'authentification du client (12).

4. Procédé (400) selon l'une quelconque des revendications 1 à 3, dans lequel l'authentification du client (12) comprend la réception, à partir de l'API (14), d'informations d'identification de client.

5. Procédé (400) selon l'une quelconque des revendications 1 à 4, dans lequel le stockage de la première partie des données client (30a) comprend la détermination qu'un seuil de limite de données (202) n'a pas été atteint.

6. Procédé (400) selon l'une quelconque des revendications 1 à 5, dans lequel l'agrégation de la première partie des données client (30a) avec la deuxième partie des données client (30b) comprend la détermination que le seuil de limite de données (202) a été atteint.

7. Procédé (400) selon l'une quelconque des revendications 1 à 6, dans lequel l'agrégation de la première partie des données client (30a) avec la deuxième partie des données client (30b) comprend :
la combinaison de la première partie des données client (30a) et de la deuxième partie des données client (30b) ;
le filtrage de la première partie des données client (30a) et de la deuxième partie des données client (30b) ; ou
la transformation de la première partie des données client (30a) et de la deuxième partie des données client (30b).

8. Procédé (400) selon l'une quelconque des revendications 1 à 7, dans lequel la réception de la première partie des données client (30a) comprend la transmission, à l'API (14), d'une réponse (260) accusant réception de la première partie des données client (30a).

9. Procédé (400) selon l'une quelconque des revendications 1 à 8, dans lequel les opérations comprennent en outre, après la transmission des données client agrégées (30A) au service tiers (150) :
la réception, à partir du service tiers (150), d'une réponse de succès (260) indiquant le traitement réussi des données client agrégées (30A) ; et
le transfert de la réponse de succès (260) à l'API (14).

10. Procédé (400) selon l'une quelconque des revendications 1 à 9, dans lequel les opérations comprennent en outre, avant la réception de la demande d'agrégation (20), la réception, à partir du service tiers (150), d'un fichier de configuration, le fichier de configuration comprenant des informations de configuration définissant la collecte des données client agrégées (30A).

11. Système (100) comprenant :
un matériel de traitement de données (144) ; et
un matériel de mémoire (146) en communication avec le matériel de traitement de données (144), le matériel de mémoire (146) stockant des instructions qui lorsqu'elles sont exécutées sur le matériel de traitement de données (144), amènent le matériel de traitement de données (144) à réaliser le procédé selon les revendications 1 à 10.
